# EUROPEAN PATENT SPECIFICATION

(11) **EP 4 316 830 B1**
(45) Date of publication and mention of the grant of the patent: **25.11.2026**
(21) Application number: 22779656.2
(22) Date of filing: 22.02.2022
(51) Int. Cl.: B32B 27/32, C08L 23/06, C08L 23/08, C08L 23/14, C08L 23/16, C08L 23/26, C09J 123/12, C09J 123/14, B32B 15/085, B32B 15/20, B32B 15/09, B32B 27/08, B32B 27/36

(54) **RESIN COMPOSITION AND LAMINATE HAVING LAYER COMPRISING SAID RESIN COMPOSITION**
HARZZUSAMMENSETZUNG UND LAMINAT MIT SCHICHT MIT DIESER HARZZUSAMMENSETZUNG
COMPOSITION DE RÉSINE ET STRATIFIÉ PRÉSENTANT UNE COUCHE COMPRENANT LADITE COMPOSITION DE RÉSINE

(30) Priority: 31.03.2021 JP 2021061957
(43) Date of publication of application: 07.02.2024
(73) Proprietor: Mitsui Chemicals, Inc., Tokyo 104-0028 (JP)
(72) Inventor: HAYAKAWA Akio, Ichihara-shi, Chiba 299-0108 (JP); YOSHIMOTO Koya, Shanghai 200070 (CN)
(74) Representative: Hoffmann Eitle
(86) International application number: PCT/JP2022/007219
(87) International publication number: WO 2022/209431

(56) References cited:
- WO-A1-2008/093648
- WO-A1-2019/176403
- JP-A- 2004 269 688
- JP-A- 2012 188 662
- JP-A- 2014 172 916
- JP-A- 2018 154 683
- JP-A- 2018 188 631
- JP-A- 2020 111 745
- JP-A- H11 293 059

## Description

### Technical Field

The present invention relates to a resin composition having further improved adhesiveness with a substrate layer when used as an adhesive layer in a multilayer body, and to a multilayer body with superior adhesive strength between layers that includes a layer composed of the resin composition.

### Background Art

In order to provide packaging films with gas barrier properties, water vapor barrier properties, and oil resistance, multilayer films composed of resins such as ethylene/vinyl acetate copolymer (EVOH), polyamide (PA), polyethylene terephthalate (PET) including polyester, and polypropylene (PP) are used. A method for forming multilayer films is, in the case of all layers constituted by thermoplastic resin, typically co-extrusion forming because forming is easy and the resulting multilayer film has excellent interlayer adhesiveness.

Meanwhile, for applications where more rigidity is required as packaging films, biaxially or uniaxially stretched films are used as the substrate layer (substrate film), and for applications where light shielding properties and high barrier properties are required, aluminum (Al) foil, aluminum vapor deposition films, or transparent vapor deposition films with aluminum oxide or silicon oxide are used as a layer in the multilayer film.

As one method for obtaining such multilayer films having a biaxially or uniaxially stretched film, or Al foil, Al vapor deposition film, or transparent vapor deposition film, a method is employed in which an adhesive is applied to the pasting surface between a layer such as a pre-formed stretched film, Al foil, or Al vapor deposition film and a layer such as a thermally fusible film, and then these films are pasted together by performing dry lamination.

However, dry lamination has problems such as toxicity of the residual solvent contained in the adhesive and complexity of the process, and therefore, multilayering by extrusion lamination without the use of adhesive is also carried out.

On the other hand, extrusion lamination employs, in order to improve the adhesive strength between layers, a method of extrusion laminating a melted adhesive resin onto the surface of pre-formed stretched film, Al foil, Al vapor deposition film, or other materials, but the adhesiveness between the two layers is not necessarily high, and the obtained multilayer film may have problems such as occurrence of delamination at the interface between the substrate layer and the adhesive resin layer.

As compositions with excellent adhesive strength, proposed is a modified polyolefin composition for adhesion composed of a propylene-based polymer, a tackifier, a graft-modified propylene-based polymer, a polyethylene, and an ethylene/α-olefin random copolymer (Patent Literature 1), or a resin composition composed of a propylene-based resin including a modified polypropylene that has been modified with an unsaturated carboxylic acid or a derivative thereof, a propylene-based copolymer, an ethylene/α-olefin copolymer, and a polyethylene-based resin (Patent Literature 2).

However, the modified polyolefin composition for adhesion proposed in Patent Literature 1 contains a tackifier, which thus may cause occurrence of fuming at the time of extrusion, or when a multilayer film including a layer composed of such a modified polyolefin composition for adhesion is used as a packaging material for oily food and beverage products, the tackifier may leak into the food and beverage products. The resin composition proposed in Patent Literature 2 is free of a tackifier, but still lacks adhesive strength, and depending on the application, there is a need for a further resin composition for adhesives with excellent adhesive strength.
Patent Literature 3 describes a resin composition containing a low melting heat propylene type resin and a graft-modified propylene type resin, and a multilayer stretched film formed thereof.

### Citation List

### Patent Literature

Patent Literature 1: JP2004-269688A
Patent Literature 2: JP2012-188662A
Patent Literature 3: JP2018-154683A

### Summary of Invention

### Technical Problem

An object of the present invention is to obtain a resin composition having further improved adhesiveness with a substrate layer when used as an adhesive layer in a multilayer body, and a multilayer body with superior adhesive strength between layers that includes a layer composed of the resin composition.

### Solution to Problem

The present invention relates to a resin composition comprising:
a propylene-based polymer (A) in a range of 5 to 70% by weight;
a soft propylene-based polymer (B) in a range of 95 to 30% by weight;
a propylene-based polymer graft-modified with an ethylenically unsaturated monomer, (C), in a range of 0.1 to 20% by weight;
a polyethylene (D) in a range of 1 to 20% by weight; and
an ethylene/α-olefin random copolymer (E) in a range of 1 to 30% by weight,
provided that a total amount of (A), (B), (C), (D), and (E) is 100% by weight.

### Propylene-based polymer (A):

A propylene-based polymer having a content of structural units derived from propylene in a range of 80 to 100 mol% and a content of structural units derived from ethylene and/or an α-olefin excluding propylene in the range of 20 mol% or less, provided that a total amount of the content of structural units derived from propylene and the content of structural units derived from ethylene and/or an α-olefin excluding propylene is 100 mol%.

The density as measured in accordance with ASTM D1505 is 0.89 g/cm³ or more.

### Soft propylene-based polymer (B):

A soft propylene-based polymer having a content of structural units derived from propylene in a range of 50 to 95 mol% and a content of structural units derived from ethylene and/or an α-olefin excluding propylene in a range of 5 to 50 mol%, provided that a total amount of the content of structural units derived from propylene and the content of structural units derived from ethylene and/or an α-olefin excluding propylene is 100 mol%.

The density as measured in accordance with ASTM D1505 is less than 0.89 g/cm³.

### Propylene-based polymer (C) graft-modified with an ethylenically unsaturated monomer:

A modified propylene-based polymer that is formed by graft-modifying, with an ethylenically unsaturated monomer, a propylene-based polymer (c) having a content of structural units derived from propylene of 50 to 100 mol% and a content of structural units derived from ethylene and/or an α-olefin excluding propylene of 50 mol% or less, provided that a total amount of the content of structural units derived from ethylene and the content of structural units derived from ethylene and/or an α-olefin excluding propylene is 100 mol%, wherein the ethylenically unsaturated monomer is an unsaturated carboxylic acid and/or a derivative thereof.

### Polyethylene (D):

The content of structural units derived from ethylene is 90 to 100 mol%.

The density as measured in accordance with ASTM D1505 is in the range of 0.90 to 0.94 g/cm³.

### Ethylene/α-olefin random copolymer (E):

The content of structural units derived from ethylene is in a range of 50 to 88 mol% and the content of structural units derived from an α-olefin is in a range of 12 to 50 mol%, provided that a total amount of the content of structural units derived from ethylene and the content of structural units derived from an α-olefin is 100 mol%.

The density as measured in accordance with ASTM D1505 is less than 0.90 g/cm³.

### Advantageous Effects of Invention

Since the resin composition of the present invention has good extrudability and excellent adhesive strength with a substrate, the present invention provides a resin composition that can maintain good adhesiveness with a substrate layer, and a multilayer body that includes a layer composed of the resin composition.

### Description of Embodiments

### <Propylene-based polymer (A)>

The propylene-based polymer (A), which is one of the components contained in the resin composition of the present invention, is a propylene-based polymer having a content of structural units derived from propylene in the range of 80 to 100 mol%, preferably 81 to 99 mol%, and more preferably 82 to 98 mol%, and a content of structural units derived from ethylene and/or an α-olefin excluding propylene in the range of 0 to 20 mol%, preferably 1 to 19 mol%, and more preferably 2 to 18 mol%, provided that the total amount of the content of structural units derived from propylene and the content of structural units derived from ethylene and/or an α-olefin excluding propylene is 100 mol%, and the density as measured in accordance with ASTM D1505 is in the range of 0.89 g/cm³ or more, preferably 0.89 to 0.92 g/cm³, and more preferably 0.89 to 0.91 g/cm³. The resin composition of the present invention containing the propylene-based copolymer (A) whose density is in the above range has an excellent balance of flexibility and mechanical strength, and also has high adhesive force with other layers.

Specific examples of the propylene-based polymer (A) according to the present invention include a propylene homopolymer, or a copolymer of propylene and ethylene and/or an α-olefin having 4 to 20 carbon atoms.

Examples of the α-olefin having 4 to 20 carbon atoms include 1-butene, 1-pentene, 1-hexene, 4-methyl-1-pentene, 1-octene, 1-decene, 1-dodecene, 1-tetradecene, 1-hexadecene, 1-octadecene, and 1-eicosene. As at least one olefin selected from ethylene and the α-olefins, ethylene, 1-butene, 1-hexene, 4-methyl-1-pentene, and 1-octene are particularly preferred, and ethylene and the α-olefins may be used alone, or two or more of them, such as ethylene and 1-butene, may be used.

The copolymer of propylene and these α-olefins may be a random copolymer or a block copolymer. The structural units derived from these α-olefins can be included in the copolymer of α-olefins and propylene at a proportion of 0 to 20 mol%, preferably 1 to 19 mol%.

The propylene-based polymer (A) according to the present invention preferably satisfies the following requirement (a). (a) The melting point (Tm) as measured using a differential scanning calorimeter (DSC) is in the range of 120°C or higher, more preferably 120 to 170°C, and still more preferably 130 to 165°C.

The propylene-based polymer (A) according to the present invention has a melt flow rate (MFR) usually in the range of 0.01 to 1000 g/10 min, preferably 0.05 to 100 g/10 min, as measured at 230°C with a load of 2.16 kg, in accordance with ASTM D 1238.

Examples of the propylene-based polymer (A) according to the present invention include a propylene homopolymer with excellent heat resistance, a block copolymer with an excellent balance of heat resistance and flexibility, such as a block copolymer (block PP) usually having 3 to 30% by mass of a n-decane eluted rubber component, and a random copolymer (random PP) with an excellent balance of flexibility and transparency, such as a random copolymer (random PP) having a melting point (Tm) in the range of 120°C or higher, preferably 130 to 150°C, as measured using a differential scanning calorimeter (DSC). It can be selected as appropriate from among these in order to obtain the desired physical properties, or two or more propylene-based polymers (A) with different melting points and rigidity may be used in combination.

The propylene-based polymer (A) according to the present invention can be produced by, for example, polymerizing propylene or copolymerizing propylene and other α-olefins in a Ziegler catalyst system composed of a solid catalyst component containing magnesium, titanium, halogen, and an electron donor as essential components, an organic aluminum compound, and an electron donor, or a metallocene catalyst system using a metallocene compound as one component of the catalyst.

### <Soft propylene-based polymer (B)>

The soft propylene-based polymer (B), which is one of the components contained in the resin composition of the present invention, is a soft propylene-based polymer having a content of structural units derived from propylene in the range of 50 to 95 mol%, preferably 60 to 94 mol%, and more preferably 70 to 93 mol%, and a content of structural units derived from ethylene and/or an α-olefin excluding propylene, preferably an α-olefin having 4 to 20 carbon atoms, in the range of 5 to 50 mol%, preferably 6 to 40 mol%, and more preferably 7 to 30 mol%, provided that the total amount of the content of structural units derived from propylene and the content of structural units derived from ethylene and/or an α-olefin excluding propylene is 100 mol%, and the density as measured in accordance with ASTM D1505 is in the range of less than 0.89 g/cm³, preferably 0.85 to 0.89 g/cm³, and more preferably 0.86 to 0.88 g/cm³. The resin composition of the present invention containing the soft propylene-based polymer (B) whose density is in the above range has an excellent balance of flexibility and mechanical strength, and also has high adhesive force with other layers.

Examples of the α-olefin having 4 to 20 carbon atoms include 3-methyl-1-butene, 1-butene, 1-pentene, 1-hexene, 4-methyl-1-pentene, 1-octene, 1-decene, 1-dodecene, 1-tetradecene, 1-hexadecene, 1-octadecene, and 1-eicosene.

As at least one olefin selected from ethylene and the α-olefins, ethylene, 1-butene, 1-hexene, 4-methyl-1-pentene, and 1-octene are particularly preferred, and ethylene and the α-olefins may be used alone, or two or more of them, for example, ethylene and 1-butene may be used.

The soft propylene-based polymer (B) according to the present invention preferably satisfies the following requirement (b).
(b) The melting point (Tm) as measured using a differential scanning calorimeter (DSC) is in the range of 110°C or lower, preferably 40 to 110°C, and more preferably 45 to 108°C, or the melting point is not observed.

Here, "the melting point is not observed" means that no crystal melting peak with a crystal melting enthalpy of 1 J/g or more is observed in the range of -150 to 200°C in the differential scanning calorimetry. As for the above melting point (Tm), when the melting point (Tm) satisfies the above conditions, it is preferable in terms of compatibility with propylene-based polymers and transparency.

Details of the melting point measurement conditions are as described in the section of Examples described later.

The soft propylene-based polymer (B) according to the present invention usually has a MFR of 0.01 to 100 g/10 min, preferably 0.01 to 30 g/10 min, as measured at 230°C with a load of 2.16 kg, in accordance with ASTM D1238.

The soft propylene-based polymer (B) according to the present invention preferably has a single glass transition temperature, and the glass transition temperature (Tg) is usually in the range of -50 to 10°C, preferably -45 to 0°C, and more preferably -40 to 0°C, as measured using a differential scanning calorimeter (DSC).

When the soft propylene-based polymer (B) has a glass transition temperature (Tg) within the above range, it is preferable because packaging materials having the resulting resin composition exhibit excellent cold resistance and lowtemperature characteristics, as well as stress-absorbing performance.

### <Propylene-based polymer (C) graft-modified with an ethylenically unsaturated monomer>

This is a propylene-based polymer (C), which is one of the components contained in the resin composition of the present invention and has been graft-modified with an ethylenically unsaturated monomer [hereinafter, this may be abbreviated as "modified propylene-based polymer (C)"].

The modified propylene-based polymer (C) according to the present invention is a modified propylene-based polymer that is formed by graft-modifying, with an ethylenically unsaturated monomer, a propylene-based polymer (c) having a content of structural units derived from propylene of 50 to 100 mol% and a content of structural units derived from ethylene and/or an α-olefin excluding propylene of 50 mol% or less, provided that the total amount of the content of structural units derived from ethylene and the content of structural units derived from ethylene and/or an α-olefin excluding propylene is 100 mol%.

The propylene-based polymer (c) according to the present invention is a propylene homopolymer and/or a propylene/α-olefin copolymer. The α-olefin is not limited, but preferred examples thereof include ethylene and an α-olefin having 4 to 20 carbon atoms, which may be one α-olefin alone or two or more α-olefins. The preferred α-olefin is ethylene or an α-olefin having 4 to 10 carbon atoms, and among these, ethylene and an α-olefin having 4 to 8 carbon atoms are particularly suitable. Here, in the propylene/α-olefin copolymer, the content of structural units derived from propylene is in the range of 50 to 100 mol%, preferably 60 to 100 mol%, and more preferably 70 to 100 mol%, and the content of structural units derived from ethylene and/or α-olefin excluding propylene is in the range of 0 to 50 mol%, preferably 0 to 40 mol%, and more preferably 0 to 30 mol%, provided that the total amount of the content of structural units derived from ethylene and the content of structural units derived from ethylene and/or an α-olefin excluding propylene is 100 mol%.

The method for producing the propylene-based polymer (c) according to the present invention is not particularly limited, and examples thereof include well-known methods using well-known catalysts such as Ziegler-Natta catalysts and metallocene catalysts.

The ethylenically unsaturated monomer with which the propylene-based polymer (c) according to the present invention is graft-modified is an unsaturated carboxylic acid and/or derivative thereof. Examples of the ethylenically unsaturated monomer may include an unsaturated compound having one or more carboxylic acid groups, an ester of a compound having a carboxylic acid group and an alkyl alcohol, and an unsaturated compound having one or more carboxylic anhydride groups.

Examples of the unsaturated group that the unsaturated compound has may include a vinyl group, a vinylene group, and an unsaturated cyclic hydrocarbon group. The unsaturated carboxylic acids and/or derivatives thereof may be used singly or in combinations of two or more thereof. Among these ethylenically unsaturated monomers, an unsaturated dicarboxylic acid or an acid anhydride thereof is suitable, and maleic acid, nadic acid, or an acid anhydride thereof is particularly preferred.

The method for grafting the propylene-based polymer (c) according to the present invention with an ethylenically unsaturated monomer is not particularly limited, and conventionally known graft polymerization methods such as the solution method and the melt extruding method can be employed. Examples thereof include a method in which the propylene-based polymer (c) is melted and the ethylenically unsaturated monomer is added to perform the graft reaction, or a method in which the propylene-based polymer (c) is dissolved in a solvent to form a solution and the ethylenically unsaturated monomer is added thereto to perform the graft reaction.

In the modified propylene-based polymer (C) according to the present invention, preferably, the content of structural units derived from the ethylenically unsaturated monomer is preferably 0.01 to 5% by mass or 0.01 to 5.0% by mass, more preferably 0.05 to 3.5% by mass, in terms of structural units derived from maleic anhydride.

The resin composition containing the modified propylene-based polymer (C) in which the content of structural units derived from the ethylenically unsaturated monomer is within the aforementioned range can provide a resin composition with an excellent balance of processability and adhesiveness.

### <Polyethylene (D)>

The polyethylene (D), which is one of the components contained in the resin composition of the present invention, has a content of structural units derived from ethylene of 90 to 100 mol% and a density in the range of 0.90 to 0.94 g/cm³, preferably 0.91 to 0.93 g/cm³, as measured in accordance with ASTM D1505.

The polyethylene (D) according to the present invention is an ethylene homopolymer, or a copolymer of ethylene and at least one α-olefin selected from α-olefins having 3 to 20 carbon atoms, manufactured and marketed as high-pressure low-density polyethylene (LDPE), linear low-density polyethylene (LLDPE), medium-density polyethylene (MDPE), or high-density polyethylene (HDPE), and it is an ethylene-based polymer mainly composed of ethylene.

Examples of the α-olefins having 3 to 20 carbon atoms include propylene, 3-methyl-1-butene, 1-butene, 1-pentene, 1-hexene, 4-methyl-1-pentene, 1-octene, 1-decene, 1-dodecene, 1-tetradecene, 1-hexadecene, 1-octadecene, and 1-eicosene. These α-olefins may be used singly or in combinations of two or more thereof.

The polyethylene (D) according to the present invention usually has a MFR in the range of 0.1 to 10 g/10 min, preferably 0.5 to 8 g/10 min, and more preferably 1 to 6 g/10 min, as measured at 190°C and with a load of 2.16 kg, in accordance with ASTM D1238. The resin composition of the present invention containing the polyethylene (D) whose MFR is in the above range has an excellent balance of flexibility and mechanical strength, and also has high adhesive force with other layers.

The method for producing the polyethylene (D) according to the present invention is not particularly limited, and it can be produced by the high pressure method and well-known methods using well-known catalysts such as Ziegler-Natta catalysts and metallocene catalysts. Furthermore, there are no particular restrictions on the stereoregularity and molecular weight, as long as it satisfies the processability and has strength to withstand use when made into a formed body. It is also possible to use commercially available resins as they are.

### <Ethylene/α-olefin random copolymer (E)>

The ethylene/α-olefin random copolymer (E), which is one of the components contained in the resin composition of the present invention, has a content of structural units derived from ethylene in the range of 50 to 88 mol% and a content of structural units derived from an α-olefin in the range of 12 to 50 mol%, provided that the total amount of the content of structural units derived from ethylene and the content of structural units derived from an α-olefin is 100 mol%, and a density as measured in accordance with ASTM D1505 of less than 0.90 g/cm³.

The α-olefin copolymerized with ethylene is preferably an α-olefin having 3 to 20 carbon atoms, and specific examples thereof include propylene, 3-methyl-1-butene, 1-butene, 1-pentene, 1-hexene, 4-methyl-1-pentene, 1-octene, 1-decene, 1-dodecene, 1-tetradecene, 1-hexadecene, 1-octadecene, and 1-eicosene. These α-olefins may be used singly or in combinations of two or more thereof.

In the ethylene/α-olefin random copolymer (E) according to the present invention, the content of structural units derived from ethylene is preferably in the range of 50 to 88 mol%, more preferably 60 to 86 mol%, and still more preferably 60 to 85 mol%, and the content of structural units derived from an α-olefin is preferably in the range of 12 to 50 mol%, more preferably 14 to 40 mol%, and still more preferably 15 to 40 mol%.

The ethylene/α-olefin random copolymer (E) according to the present invention preferably has a density in the range of 0.85 to 0.90 g/cm³, more preferably 0.86 to 0.90 g/cm³.

The ethylene/α-olefin random copolymer (E) according to the present invention usually has a MFR of 0.1 to 100 g/10 min, preferably in the range of 0.5 to 50 g/10 min, as measured at 190°C and with a load of 2.16 kg, in accordance with ASTM D 1238. The resin composition of the present invention containing the ethylene/α-olefin random copolymer (E) whose MFR is in the above range has an excellent balance of flexibility and mechanical strength, and also has high adhesive force with other layers.

The ethylene/α-olefin random copolymer (E) according to the present invention preferably satisfies the following requirement (e).
(e) The melting point (Tm) as measured using a differential scanning calorimeter (DSC) is in the range of 110°C or lower, preferably 40 to 85°C, and more preferably 40 to 60°C, or the melting point is not observed.

Here, "the melting point is not observed" means that, in the differential scanning calorimetry, no crystal melting peak with a crystal melting enthalpy of 1 J/g or more is observed in the range of -150 to 200°C. As for the aforementioned melting point (Tm), the resin composition of the present invention containing the ethylene/α-olefin random copolymer (E) whose melting point (Tm) satisfies the above conditions has an excellent balance of flexibility and mechanical strength, and also has high adhesive force with other layers.

Details of the melting point measurement conditions are as described in the section of Examples, which will be described later.

The method for producing the ethylene/α-olefin random copolymer (E) according to the present invention is not particularly limited, and examples thereof include well-known methods using well-known catalysts such as Ziegler-Natta catalysts and metallocene catalysts.

### <<Resin composition>>

The resin composition of the present invention includes:
the propylene-based polymer (A) in the range of 5 to 70% by weight, preferably 5 to 50% by weight, and still more preferably 5 to 30% by weight;
the soft propylene-based polymer (B) in the range of 30 to 95% by weight, preferably 35 to 95% by weight, and still more preferably 40 to 95% by weight;
the propylene-based polymer (C) graft-modified with an ethylenically unsaturated monomer, in the range of 0.1 to 20% by weight, preferably 0.5 to 15% by weight, and still more preferably 1 to 10% by weight;
the polyethylene (D) in the range of 1 to 20% by weight, preferably 1 to 19% by weight, more preferably 2 to 18% by weight, and still more preferably 10 to 18% by weight; and
the ethylene/α-olefin random copolymer (E) in the range of 1 to 30% by weight, preferably 2 to 29% by weight, and still more preferably 3 to 28% by weight,
provided that the total amount of (A), (B), (C), (D), and (E) is 100% by weight.

When the resin composition of the present invention includes the component (A), the component (B), the component (C), and the component (E) in the above ranges, a resin composition with an excellent balance of processability and adhesiveness can be obtained.

When the resin composition of the present invention contains the component (A), the component (B), the component (C), the component (D), and the component (E) in the above ranges, a resin composition with an excellent balance of processability and adhesiveness can be obtained.

The resin composition of the present invention has excellent adhesiveness with other materials and thus can be used as a resin composition for adhesives, such as a resin composition for hot-melt adhesives.

The resin composition of the present invention usually has a MFR in the range of 1 to 50 g/10 min, preferably 5 to 30 g/10 min, as measured at 230°C with a load of 2.16 kg, in accordance with ASTM D1238. The resin composition whose MFR is within the above range has an excellent balance of processability and adhesiveness.

The resin composition of the present invention may contain thermoplastic resins such as other polyolefin-based resins, additives for resins (for example, a stabilizer such as heat stabilizer and weathering stabilizer, a crosslinking agent, a crosslinking aid, an antistatic agent, a slipping agent, an antiblocking agent, an antifogging agent, a lubricant, a dye, a pigment, a filler, a mineral oil-based softener, a petroleum resin, a wax, and others), and others to the extent that the purpose of the present invention is not compromised.

However, it is preferable that the resin composition of the present invention have a content of a tackifier of 0% by weight or more and less than 1% by weight, more preferably 0% by weight. Here, having a content of a tackifier of 0% by weight means being free of a tackifier.

Examples of the tackifier include an aliphatic hydrocarbon resin mainly composed of a C4 fraction, C5 fraction, a mixture thereof, or an arbitrary fraction thereof, obtained by cracking petroleum, naphtha, or the like, such as isoprene, 1,3-pentadiene, and others in the C5 fraction; an aliphatic/aromatic copolymerized hydrocarbon resin formed by copolymerizing an arbitrary fraction of the C4 and C5 fractions with the C9 fraction; an alicyclic hydrocarbon resin formed by hydrogenating an aromatic hydrocarbon resin; a synthetic terpene-based hydrocarbon resin with a structure including aliphatic, alicyclic, and aromatic moieties; a terpene-based hydrocarbon resin made from α- and β-pinene in turpentine oil; a coumarone indenebased hydrocarbon resin made from an indene and a styrene in coal tar naphtha; a low molecular weight styrene-based resin; and a rosin-based hydrocarbon resin.

### <<Method for producing resin composition>>

The olefin-based polymer composition of the present invention can be produced by a variety of known methods, for example, by melt extruding or dry blending the propylene-based polymer (A), the soft propylene-based polymer (B), the propylene-based polymer (C) graft-modified with an ethylenically unsaturated monomer, the polyethylene (D), and the ethylene/α-olefin random copolymer (E) in amounts in the above ranges.

### <<Multilayer body>>

The multilayer body of the present invention is a multilayer body including a layer composed of the above resin composition of the present invention. For example, it is a multilayer body in which a layer composed of the resin composition of the present invention is laminated on at least one surface of a substrate layer.

In the multilayer body of the present invention, there is no particular restriction on the form of the substrate layer, which may be any form, such as a film, a container, or a tube, for example.

As the substrate used in the present invention, any polymer having film forming ability, paper, aluminum foil, cellophane, and other materials can be used. Examples of such a polymer may include an olefin copolymer such as high-density polyethylene, medium- and low-density polyethylene, ethylene/vinyl acetate copolymer, ethylene/acrylic ester copolymer, ionomer, polypropylene, poly-1-butene, and poly-4-methyl-1-pentene; a vinyl copolymer such as polyvinyl chloride, polyvinylidene chloride, polystyrene, polyacrylate, and polyacrylonitrile; a polyamide such as nylon 6, nylon 66, nylon 7, nylon 10, nylon 1, nylon 12, nylon 610, and polymethaxylene adipamide; a polyester such as polyethylene terephthalate, polyethylene terephthalate/isophthalate, and polybutylene terephthalate; a polyvinyl alcohol, an ethylene/vinyl alcohol copolymer, and a polycarbonate.

It is preferable for the substrate according to the present invention to have an inorganic compound vapor deposition layer or a metal layer on at least one surface of the substrate because the resulting multilayer body is superior in terms of beauty and gas barrier properties.

When using a substrate having an inorganic vapor deposition layer or a metal layer on at least one surface, the layer of the resin composition of the present invention may be in contact with the inorganic vapor deposition layer or metal layer of the substrate (that is, the substrate layer may have the inorganic vapor deposition layer or metal layer on its surface on which the resin composition is laminated) or may be on the opposite surface. However, in the case where the inorganic vapor deposition layer is located on the outer side, one or more protective layers can also be laminated.

As the protective layers, the aforementioned polymer, paper, aluminum foil, cellophane, and other materials that can be used for the substrate layer can be used, and for example, polyethylene terephthalate can be used.

The substrate according to the present invention can be selected as appropriate depending on the purpose. For example, in the case where the object to be packaged is a food product susceptible to corrosion, resins with excellent transparency, rigidity, and gas permeation resistance, such as polyamide, polyvinylidene chloride, ethylene/vinyl alcohol copolymer, polyvinyl alcohol, and polyester, are selected. For confectionery, fiber packaging, and other applications, polypropylene and other materials with good transparency, rigidity, and water permeation resistance can be selected as the outer layer. Also, when the substrate is a polymer, it may be stretched uniaxially or biaxially. The substrate may also include a printed surface or primer.

Although examples of the inorganic compound used for inorganic compound vapor deposition include a metal such as aluminum, gold, and silver, and an oxide such as aluminum oxide, silicon oxide, magnesium oxide, and indium-zinc oxide, in terms of price and gas barrier properties, aluminum, aluminum oxide, and silicon oxide are suitable.

There is no particular restriction on the thickness of the vapor deposition layer, but it is preferably in the range of 50 to 5000 Å, and more preferably in the range of 300 to 2000 Å.

Examples of the method for obtaining a multilayer body using the resin composition of the present invention include a method in which the resin composition of the present invention and other one or two or more resins constituting the multilayer body are melted in separate extruders, and after melting, fed separately to a die with a structure of two layers or three or more layers, and onto a pre-formed substrate, co-extruded and laminated so that the resin composition of the present invention comes to the substrate side, and a so-called sandwich lamination method, in which the composition is melt extruded between two layers of the aforementioned pre-formed substrates. The die used here is a so-called flat die, and either a single manifold type using a black box or a multi-manifold type may be used.

Note that there is no particular restriction on the thickness of the layer for which the resin composition of the present invention is used, but it is preferably in the range of 0.1 to 1000 µm.

The resin composition of the present invention exhibits excellent adhesive performance to metal layers and resins. Therefore, the multilayer body of the present invention can be suitably used for food packaging for snacks, dry foods, and other products, and other applications.

### Examples

Hereinafter, the present invention will be described further specifically based on Examples, but the present invention is not limited to these Examples.

The polymers and other materials used in Examples and Comparative Examples are listed below.

### [Propylene-based polymer (A)]

As the propylene-based polymer (A), a propylene/ethylene/1-butene random copolymer (PP) was used.

Propylene content = 87 mol%, ethylene content = 7 mol%, 1-butene content = 6 mol%, MFR (230°C, 2.16 kg load) = 7 g/10 min, density = 0.90 g/cm³, melting point (Tm) = 141°C.

### [Soft propylene-based polymer (B)]

As the soft propylene-based polymer (B), a propylene/ethylene random copolymer (PER) was used.

Propylene content = 79 mol%, ethylene content = 21 mol%, MFR (230°C, 2.16 kg load) = 20 g/10 min, density = 0.86 g/cm³, melting point (Tm) = 109°C, glass transition temperature (Tg) = -33°C.

### [Propylene-based polymer (C) graft-modified with an ethylenically unsaturated monomer]

As the modified propylene-based polymer (C), a maleic anhydride-modified propylene homopolymer (modified PP) was used.

MFR (230°C, 2.16 kg load) = 100 g/10 min, density = 0.90 g/cm³, amount of maleic anhydride graft modification = 3.0% by mass.

### [Polyethylene (D)]

As the polyethylene (D), the following high-pressure low-density polyethylenes were used.

### High-pressure low-density polyethylene (LDPE-1)

MFR (190°C, 2.16 kg load) = 4 g/10 min, density = 0.92 g/cm³.

### High-pressure low-density polyethylene (LDPE-2)

MFR (190°C, 2.16 kg load) = 7 g/10 min, density = 0.92 g/cm³.

### [Ethylene/α-olefin random copolymer (E)]

As the ethylene/α-olefin random copolymer (E), the following ethylene/1-butene random copolymers and another copolymer were used.

### Ethylene/1-butene copolymer (EBR-1)

MFR (230°C, 2.16 kg load) = 7 g/10 min, density = 0.87 g/cm³, ethylene content = 85 mol%, 1-butene content = 15 mol%.

### Ethylene/1-butene copolymer (EBR-2)

MFR (230°C, 2.16 kg load) = 70 g/10 min, density = 0.87 g/cm³, ethylene content = 85 mol%, 1-butene content = 15 mol%.

### Ethylene/1-butene copolymer (EBR-3)

MFR (230°C, 2.16 kg load) = 7 g/10 min, density = 0.89 g/cm³, ethylene content = 90 mol% (82% by weight), 1-butene content = 10 mol% (18% by weight).

### Ethylene/propylene copolymer (EPR)

MFR (230°C, 2.16 kg load) = 8 g/10 min, density = 0.87 g/cm³, ethylene content = 80 mol%, propylene content = 20 mol%.

The physical properties of the polymers and resin compositions used in Examples and Comparative Examples were measured by the following methods.

### [Methods for measuring physical properties]

### <Melt flow rate (MFR)>

The MFR was measured in accordance with ASTM D1238. The measurement was performed at 230°C with a load of 2.16 kg for the propylene-based polymer (A), the soft propylene-based polymer (B), the propylene-based polymer (C) graft-modified with an ethylenically unsaturated monomer, the ethylene/α-olefin copolymer (E), and the resin composition, and at 190°C with a load of 2.16 kg for the polyethylene (D).

### <Density>

The density was measured in accordance with ASTM D1505 (density-gradient tube method).

### <Compositional features of polymer>

The content of structural units derived from ethylene and structural units derived from an α-olefin in the copolymer was determined by ¹³C-NMR using the following apparatus and conditions.

For the quantification of ethylene and α-olefin contents, using the JECX400P type nuclear magnetic resonance spectrometer manufactured by JEOL Ltd., the measurement was performed under the following conditions: the solvent used was a deuterated ortho-dichlorobenzene/deuterated benzene (80/20% by volume) mixed solvent, the sample concentration was 60 mg/0.6 mL, the measurement temperature was 120°C, the observation nucleus was ¹³C (100 MHz), the sequence was single-pulse proton decoupling, the pulse width was 4.62 µs (45° pulse), the repetition time was 5.5 s, the number of integrations was 8000 times, and the reference value for chemical shift was 29.73 ppm.

### <Content of structural units derived from ethylenically unsaturated monomer (content of graft modification)>

The content of structural units derived from an ethylenically unsaturated monomer (content of graft modification) was quantified by measuring the intensity of the peak (1790 cm⁻¹ in the case of using maleic anhydride) derived from the structural units with an infrared absorption spectrometer and using a calibration curve prepared in advance.

### <Melting point (Tm) and glass transition temperature (Tg)>

By performing the differential scanning calorimetry (DSC) using the following method, the Tm and Tg of the raw materials of the following adhesives were measured.

The melting point (Tm) and glass transition temperature (Tg) were determined from an endothermic curve obtained by sealing about 5 mg of the sample in an aluminum pan, and using DSCRDC220 manufactured by Seiko Instruments Inc., raising the temperature from room temperature to 200°C at 10°C/min, holding at 200°C for 5 minutes, then lowering the temperature from 200°C to -100°C at 10°C/min, holding at - 100°C for additional 5 minutes, and then raising the temperature to 200°C at 10°C/min.

In the case where multiple peaks were detected at the time of measurement, the peak temperature detected at the highest temperature side was defined as the melting point (Tm).

### [Example 1]

### <Production of resin composition>

26% by weight of the propylene-based polymer (A), PP, 45% by weight of the soft propylene-based polymer (B), PER, 4% by weight of the propylene-based polymer (C) graft-modified with an ethylenically unsaturated monomer, modified PP, and 25% by weight of the ethylene/α-olefin random copolymer (E), EBR-1 were melt extruded at 230°C using a single screw extruder to obtain a resin composition. The obtained resin composition had a MFR of 14 g/10 min and a density of 0.88 g/cm³.

### <Production of multilayer body>

A commercially available polypropylene (F329RA manufactured by Prime Polymer Co., Ltd., MFR (230°C): 27 g/10 min) and the above resin composition were co-extruded at 230°C using a co-extrusion film forming machine having a screw with a diameter of 50 mm and an effective length L/D = 28 to a T-die with a die temperature of 310°C. The extruded polypropylene and resin composition were laminated in the feed block of the T-die so that the polypropylene was the outer layer and the resin composition was the inner layer, and the film-like multilayer body with a thickness of about 40 µm, in which the outer layer and the inner layer were both 20 µm, was brought into contact in a melted state with the aluminum surface side of an aluminum PET film (aluminum layer: 20 um/polyethylene terephthalate layer: 12 µm) (extrusion lamination), withdrawn at a speed of 25 m/min while cooling with a chill roll equipped with a pinch roll, thereby obtaining a multilayer film for adhesive strength evaluation (polypropylene layer: 20 µm/resin composition layer: 20 um/aluminum layer: 20 um/polyethylene terephthalate layer: 12 µm).

### [Processability]

The presence or absence of edge oscillation of the melted film edge was evaluated at the time of forming a multilayer body by the above co-extrusion coating.

### [Interlayer adhesive force of multilayer film]

After storing the multilayer body composed of the obtained multilayer film for one week at normal temperature, the multilayer body was cut into 15 mm widths, and the interlayer adhesive force between the aluminum layer and the resin composition layer was evaluated by the T-peel method. The evaluation was carried out in an atmosphere of 23°C using a tensile tester. The crosshead speed was set at 300 mm/min.

The physical properties of the obtained resin composition and multilayer body are shown in Table 1.

### [Examples 2 to 9]

Adhesives were prepared in the same manner as in Example 1, except that the formulation was changed to those shown in Table 1, and multilayer bodies were produced by the same method as in Example 1.
The physical properties of the obtained adhesives and multilayer bodies are shown in Table 1.

### [Comparative Examples 1 to 6]

Adhesives were prepared in the same manner as in Example 1 except that the formulation was changed to those shown in Table 1, and multilayer bodies were produced by the same method as in Example 1.

The physical properties of the obtained resin compositions and multilayer bodies are shown in Table 2.

**[Table 1]**

| | | Unit | Ex. 1 | Ex. 2 | Ex. 3 | Ex. 4 | Ex. 5 |
|---|---|---|---|---|---|---|---|
| Compositional features of resin composition (wt%) | Propylene-based polymer (A) | wt% | 26 | 26 | 26 | 26 | 26 |
| | Soft propylene-based polymer (B) | wt% | 45 | 45 | 45 | 45 | 45 |
| | Propylene-based polymer (C) graft-modified with ethylenically unsaturated monomer | wt% | 4 | 4 | 4 | 4 | 4 |
| | Polyethylene (D) LDPE-1 | wt% | 0 | 0 | 10 | 10 | 0 |
| | Polyethylene (D) LDPE-2 | wt% | 0 | 0 | 0 | 0 | 10 |
| | Ethylene/ α-olefin random copolymer (E) EBR-1 | wt% | 25 | 0 | 15 | 0 | 0 |
| | Ethylene/ α-olefin random copolymer (E) EBR-2 | wt% | 0 | 0 | 0 | 0 | 0 |
| | Ethylene/ α-olefin random copolymer (E) EBR-3 | wt% | 0 | 0 | 0 | 0 | 0 |
| | Ethylene/ α-olefin random copolymer (E) EPR | wt% | 0 | 25 | 0 | 15 | 15 |
| Physical properties of resin composition | MFR (230°C) | g/10min. | 14 | 14 | 14 | 14 | 15 |
| | Density | g/cm³ | 0.88 | 0.88 | 0.88 | 0.88 | 0.88 |
| Multilayer body | Interlayer adhesive force | N/15mm | 6.9 | 6.0 | 4.6 | 3.9 | 3.8 |
| Processability | Edge oscillation of melted film edge at the time of forming multilayer body | - | Observed | Observed | Not observed | Not observed | Not observed |

**[Table 1 (continued)]**

| | | Unit | Ex. 6 | Ex. 7 | Ex. 8 | Ex. 9 |
|---|---|---|---|---|---|---|
| Compositional features of resin composition (wt%) | Propylene-based polymer (A) | wt% | 26 | 26 | 26 | 26 |
| | Soft propylene-based polymer (B) | wt% | 45 | 45 | 45 | 45 |
| | Propylene-based polymer (C) graft-modified with ethylenically unsaturated monomer | wt% | 4 | 4 | 4 | 4 |
| | Polyethylene (D) LDPE-1 | wt% | 10 | 15 | 5 | 0 |
| | Polyethylene (D) LDPE-2 | wt% | 0 | 0 | 0 | 0 |
| | Ethylene/α-olefin random copolymer (E) EBR-1 | wt% | 0 | 0 | 0 | 0 |
| | Ethylene/α-olefin random copolymer (E) EBR-2 | wt% | 15 | 10 | 20 | 25 |
| | Ethylene/α-olefin random copolymer (E) EBR-3 | wt% | 0 | 0 | 0 | 0 |
| | Ethylene/α-olefin random copolymer (E) EPR | wt% | 0 | 0 | 0 | 0 |
| Physical properties of resin composition | MFR (230°C) | g/10min. | 19 | 17 | 21 | 24 |
| | Density | g/cm³ | 0.88 | 0.88 | 0.88 | 0.88 |
| Multilayer body | Interlayer adhesive force | N/15mm | 5.9 | 5.6 | 7.1 | 6.9 |
| Processability | Edge oscillation of melted film edge at the time of forming multilayer body | - | Not observed | Not observed | Not observed | Observed |

**[Table 2]**

| | | Unit | Comp. Ex. 1 | Comp. Ex. 2 | Comp. Ex. 3 |
|---|---|---|---|---|---|
| Compositional features of resin composition (wt%) | Propylene-based polymer (A) | wt% | 56 | 41 | 26 |
| | Soft propylene-based polymer (B) | wt% | 15 | 45 | 45 |
| | Propylene-based polymer (C) graft-modified with ethylenically unsaturated monomer | wt% | 4 | 4 | 4 |
| | Polyethylene (D) LDPE-1 | wt% | 10 | 0 | 10 |
| | Polyethylene (D) LDPE-2 | wt% | 0 | 10 | 0 |
| | Ethylene/α-olefin random copolymer (E) EBR-1 | wt% | 0 | 0 | 0 |
| | Ethylene/α-olefin random copolymer (E) EBR-2 | wt% | 0 | 0 | 0 |
| | Ethylene/α-olefin random copolymer (E) EBR-3 | wt% | 0 | 0 | 15 |
| | Ethylene/α-olefin random copolymer (E) EPR | wt% | 15 | 0 | 0 |
| Physical properties of resin composition | MFR (230°C) | g/10 min. | 11 | 16 | 13 |
| | Density | g/cm³ | 0.89 | 0.89 | 0.88 |
| Multilayer body | Interlayer adhesive force | N/15 mm | 0.2 | 0.3 | 1.8 |
| Processability | Edge oscillation of melted film edge at the time of forming multilayer body | - | Not observed | Not observed | Not observed |

**[Table 2 (continued)]**

| | | Unit | Comp. Ex. 4 | Comp. Ex. 5 | Comp. Ex. 6 |
|---|---|---|---|---|---|
| Compositional features of resin composition (wt%) | Propylene-based polymer (A) | wt% | 26 | 26 | 45 |
| | Soft propylene-based polymer (B) | wt% | 45 | 45 | 51 |
| | Propylene-based polymer (C) graft-modified with ethylenically unsaturated monomer | wt% | 4 | 4 | 4 |
| | Polyethylene (D) LDPE-1 | wt% | 25 | 0 | 0 |
| | Polyethylene (D) LDPE-2 | wt% | 0 | 0 | 0 |
| | Ethylene/α-olefin random copolymer (E) EBR-1 | wt% | 0 | 0 | 0 |
| | Ethylene/α-olefin random copolymer (E) EBR-2 | wt% | 0 | 0 | 0 |
| | Ethylene/α-olefin random copolymer (E) EBR-3 | wt% | 0 | 25 | 0 |
| | Ethylene/α-olefin random copolymer (E) EPR | wt% | 0 | 0 | 0 |
| Physical properties of resin composition | MFR (230°C) | g/10 min. | 14 | 14 | 14 |
| | Density | g/cm³ | 0.89 | 0.88 | 0.88 |
| Multilayer body | Interlayer adhesive force | N/15 mm | 2.0 | 3.0 | 0.2 |
| Processability | Edge oscillation of melted film edge at the time of forming multilayer body | - | Not observed | Observed | Observed |

### [Example 10]

A resin composition was prepared in the same manner as in Example 1, except that an aluminum vapor deposition PET film (12 µm) was used as the adherend instead of the aluminum PET film and that the formulation was changed to one shown in Table 2, and a multilayer body was produced by the same method as in Example 1.

The physical properties of the obtained resin composition and multilayer body are shown in Table 3.

**[Table 3]**

| | | Unit | Ex. 10 |
|---|---|---|---|
| Compositional features of resin composition (wt%) | Propylene-based polymer (A) | wt% | 26 |
| | Soft propylene-based polymer (B) | wt% | 45 |
| | Propylene-based polymer (C) graft-modified with ethylenically unsaturated monomer | wt% | 4 |
| | Polyethylene (D) LDPE-1 | wt% | 10 |
| | Ethylene/α-olefin random copolymer (E) EBR-1 | wt% | 15 |
| Physical properties of resin composition | MFR (230°C) | g/10 min. | 14 |
| | Density | g/cm³ | 0.88 |
| Multilayer body | Interlayer adhesive force | N/15 mm | 1.0 |
| Processability | Edge oscillation of melted film edge at the time of forming multilayer body | - | Not observed |

## Claims

1. A resin composition comprising:
a propylene-based polymer (A) in a range of 5 to 70% by weight;
a soft propylene-based polymer (B) in a range of 30 to 95% by weight;
a propylene-based polymer (C) graft-modified with an ethylenically unsaturated monomer, in a range of 0.1 to 20% by weight;
a polyethylene (D) in a range of 1 to 20% by weight; and
an ethylene/α-olefin random copolymer (E) in a range of 1 to 30% by weight,
provided that a total amount of (A), (B), (C), (D), and (E) is 100% by weight;
the propylene-based polymer (A):
a propylene-based polymer having a content of structural units derived from propylene in a range of 80 to 100 mol% and a content of structural units derived from ethylene and/or an α-olefin excluding propylene in a range of 20 mol% or less, provided that a total amount of the content of structural units derived from propylene and the content of structural units derived from ethylene and/or an α-olefin excluding propylene is 100 mol%, and
having a density as measured in accordance with ASTM D1505 of 0.89 g/cm³ or more;
the soft propylene-based polymer (B):
a soft propylene-based polymer having a content of structural units derived from propylene in a range of 50 to 95 mol% and a content of structural units derived from ethylene and/or an α-olefin excluding propylene in a range of 5 to 50 mol%, provided that a total amount of the content of structural units derived from propylene and the content of structural units derived from an α-olefin excluding ethylene and/or propylene is 100 mol%, and
having a density as measured in accordance with ASTM D1505 of less than 0.89 g/cm³;
the propylene-based polymer (C) graft-modified with an ethylenically unsaturated monomer:
a modified propylene-based polymer that is formed by graft-modifying, with an ethylenically unsaturated monomer, a propylene-based polymer (c) having a content of structural units derived from propylene of 50 to 100 mol% and a content of structural units derived from ethylene and/or an α-olefin excluding propylene of 50 mol% or less, provided that a total amount of the content of structural units derived from ethylene and the content of structural units derived from ethylene and/or an α-olefin excluding propylene is 100 mol%, wherein the ethylenically unsaturated monomer is an unsaturated carboxylic acid and/or a derivative thereof;
the polyethylene (D):
a content of structural units derived from ethylene is 90 to 100 mol%, and
a density as measured in accordance with ASTM D1505 is in a range of 0.90 to 0.94 g/cm³; and
the ethylene/α-olefin random copolymer (E):
a content of structural units derived from ethylene is in a range of 50 to 88 mol% and a content of structural units derived from an α-olefin is in a range of 12 to 50 mol%, provided that a total amount of the content of structural units derived from ethylene and the content of structural units derived from an α-olefin is 100 mol%, and
a density as measured in accordance with ASTM D1505 is less than 0.90 g/cm³.

2. The resin composition according to claim 1, wherein the ethylenically unsaturated monomer is selected from an unsaturated compound having one or more carboxylic acid groups, an ester of a compound having a carboxylic acid group and an alkyl alcohol, and an unsaturated compound having one or more carboxylic anhydride groups.

3. The resin composition according to claim 1 or 2, wherein, in the ethylene/α-olefin random copolymer (E), the α-olefin constituting the ethylene/α-olefin random copolymer (E) is an α-olefin having 3 to 8 carbon atoms.

4. The resin composition according to any one of claims 1 to 3, wherein the soft propylene-based polymer (B) is a propylene/ethylene copolymer.

5. The resin composition according to any one of claims 1 to 4, wherein the propylene-based polymer (C) graft-modified with an ethylenically unsaturated monomer, has structural units derived from the ethylenically unsaturated monomer in an amount of 0.01 to 5.0% by mass.

6. The resin composition according to any one of claims 1 to 5, wherein the propylene-based polymer (C) graft-modified with an ethylenically unsaturated monomer, is a propylene-based polymer (C) graft-modified with maleic anhydride.

7. The resin composition according to any one of claims 1 to 6, wherein the resin composition is a resin composition free of a tackifier.

8. An adhesive comprising the resin composition according to any one of claims 1 to 7.

9. A multilayer body comprising a layer composed of the resin composition according to any one of claims 1 to 7.

10. The multilayer body according to claim 9, wherein the layer composed of the resin composition is laminated on at least one surface of a substrate layer.

11. The multilayer body according to claim 10, wherein the substrate layer has an inorganic compound vapor deposition layer or a metal layer on the surface of the substrate layer on which the resin composition is laminated.

12. The multilayer body according to claim 11, wherein the inorganic compound vapor deposition layer is an aluminum vapor deposition layer.

13. The multilayer body according to claim 11, wherein the metal layer is an aluminum layer.

## Patentansprüche

1. Harzzusammensetzung, umfassend:
ein Polymer auf Propylenbasis (A) in einem Bereich von 5 bis 70 Gew.-%;
ein weiches Polymer auf Propylenbasis (B) in einem Bereich von 30 bis 95 Gew.-%;
ein mit einem ethylenisch ungesättigten Monomer pfropfmodifiziertes Polymer auf Propylenbasis (C) in einem Bereich von 0,1 bis 20 Gew.-%;
ein Polyethylen (D) in einem Bereich von 1 bis 20 Gew.-%; und
ein statistisches Ethylen/α-Olefin-Copolymer (E) in einem Bereich von 1 bis 30 Gew.-%,
mit der Maßgabe, dass die Gesamtmenge von (A), (B), (C), (D) und (E) 100 Gew.-% beträgt;
das Polymer auf Propylenbasis (A):
ein Polymer auf Propylenbasis mit einem Gehalt an von Propylen abgeleiteten strukturellen Einheiten im Bereich von 80 bis 100 Mol-% und einen Gehalt an strukturellen Einheiten, die von Ethylen und/oder einem α-Olefin mit Ausnahme von Propylen abgeleitet sind, im Bereich von 20 Mol-% oder weniger, mit der Maßgabe, dass die Gesamtmenge aus dem Gehalt an von Propylen abgeleiteten strukturellen Einheiten und dem Gehalt an strukturellen Einheiten, die von Ethylen und/oder einem α-Olefin mit Ausnahme von Propylen abgeleitet sind, 100 Mol-% beträgt, und
mit einer gemäß ASTM D1505 gemessenen Dichte von 0,89 g/cm³ oder mehr;
das weiche Polymer auf Propylenbasis (B):
ein weiches Polymer auf Propylenbasis mit einem Gehalt an von Propylen abgeleiteten strukturellen Einheiten im Bereich von 50 bis 95 Mol-% und einem Gehalt an strukturellen Einheiten, die von Ethylen und/oder einem α-Olefin mit Ausnahme von Propylen abgeleitet sind, im Bereich von 5 bis 50 Mol-%, mit der Maßgabe, dass die Gesamtmenge des Gehalts an von Propylen abgeleiteten strukturellen Einheiten und des Gehalts an strukturellen Einheiten, die von einem α-Olefin mit Ausnahme von Ethylen und/oder Propylen abgeleitet sind, 100 Mol-% beträgt, und
mit einer nach ASTM D1505 gemessenen Dichte von weniger als 0,89 g/cm³;
das mit einem ethylenisch ungesättigten Monomer pfropfmodifizierte Polymer auf Propylenbasis (C):
ein modifiziertes Polymer auf Propylenbasis, das durch Pfropfmodifizierung eines Polymers auf Propylenbasis (c) mit einem ethylenisch ungesättigten Monomer gebildet wird, wobei das Polymer auf Propylenbasis (c) einen Gehalt an von Propylen abgeleiteten strukturellen Einheiten von 50 bis 100 Mol-% und einen Gehalt an strukturellen Einheiten, die von Ethylen und/oder einem α-Olefin mit Ausnahme von Propylen abgeleitet sind, von 50 Mol-% oder weniger, mit der Maßgabe, dass die Gesamtmenge aus dem Gehalt an von Propylen abgeleiteten strukturellen Einheiten und dem Gehalt an strukturellen Einheiten, die von Ethylen und/oder einem α-Olefin mit Ausnahme von Propylen abgeleitet sind, 100 Mol-% beträgt, wobei das ethylenisch ungesättigte Monomer eine ungesättigte Carbonsäure und/oder ein Derivat davon ist;
das Polyethylen (D):
ein Gehalt an von Ethylen abgeleiteten strukturellen Einheiten beträgt 90 bis 100 Mol-%, und
eine gemäß ASTM D1505 gemessene Dichte liegt im Bereich von 0,90 bis 0,94 g/cm³; und
das statistische Ethylen/α-Olefin-Copolymer (E):
ein Gehalt an von Ethylen abgeleiteten strukturellen Einheiten liegt im Bereich von 50 bis 88 Mol-%, und ein Gehalt an von einem α-Olefin abgeleiteten strukturellen Einheiten liegt im Bereich von 12 bis 50 Mol-%, mit der Maßgabe, dass die Gesamtmenge aus dem Gehalt an von Ethylen abgeleiteten strukturellen Einheiten und dem Gehalt an von einem α-Olefin abgeleiteten strukturellen Einheiten 100 Mol-% beträgt, und
eine gemäß ASTM D1505 gemessene Dichte beträgt weniger als 0,90 g/cm³.

2. Harzzusammensetzung gemäß Anspruch 1, wobei das ethylenisch ungesättigte Monomer ausgewählt ist aus einer ungesättigten Verbindung mit einer oder mehreren Carbonsäuregruppen, einem Ester einer Verbindung mit einer Carbonsäuregruppe und einem Alkylalkohol, und einer ungesättigten Verbindung mit einer oder mehreren Carbonsäureanhydridgruppen.

3. Harzzusammensetzung gemäß Anspruch 1 oder 2, wobei in dem Ethylen/α-Olefin-Random-Copolymer (E) das α-Olefin, aus dem das Ethylen/α-Olefin-Random-Copolymer (E) aufgebaut ist, ein α-Olefin mit 3 bis 8 Kohlenstoffatomen ist.

4. Harzzusammensetzung gemäß mindestens einem der Ansprüche 1 bis 3, wobei das weiche Polymer auf Propylenbasis (B) ein Propylen/Ethylen-Copolymer ist.

5. Harzzusammensetzung gemäß mindestens einem der Ansprüche 1 bis 4, wobei das mit einem ethylenisch ungesättigten Monomer pfropfmodifizierte Polymer auf Propylenbasis (C) strukturelle Einheiten aufweist, die von dem ethylenisch ungesättigten Monomer abgeleitet sind, in einer Menge von 0,01 bis 5,0 Massenprozent.

6. Harzzusammensetzung gemäß mindestens einem der Ansprüche 1 bis 5, wobei das mit einem ethylenisch ungesättigten Monomer pfropfmodifizierte Polymer auf Propylenbasis (C) ein mit Maleinsäureanhydrid pfropfmodifiziertes Polymer auf Propylenbasis (C) ist.

7. Harzzusammensetzung gemäß mindestens einem der Ansprüche 1 bis 6, wobei die Harzzusammensetzung frei von einem Klebrigmacher ist.

8. Klebstoff, der die Harzzusammensetzung gemäß mindestens einem der Ansprüche 1 bis 7 umfasst.

9. Mehrschichtkörper, der eine Schicht umfasst, die aus der Harzzusammensetzung gemäß mindestens einem der Ansprüche 1 bis 7 aufgebaut ist.

10. Mehrschichtkörper gemäß Anspruch 9, wobei die aus der Harzzusammensetzung aufgebaute Schicht auf mindestens eine Oberfläche einer Substratschicht geschichtet ist.

11. Mehrschichtkörper gemäß Anspruch 10, wobei die Substratschicht eine Schicht aus einer durch Gasphasenabscheidung aufgebrachten anorganischen Verbindung oder eine metallische Schicht auf der Oberfläche der Substratschicht aufweist, auf welche die Harzzusammensetzung geschichtet ist.

12. Mehrschichtkörper gemäß Anspruch 11, wobei die Schicht aus einer durch Gasphasenabscheidung aufgebrachten anorganischen Verbindung eine durch Gasphasenabscheidung aufgebrachte Aluminiumschicht ist.

13. Mehrschichtkörper gemäß Anspruch 11, wobei die Metallschicht eine Aluminiumschicht ist.

## Revendications

1. Composition de résine comprenant :
un polymère à base de propylène (A) dans une plage de 5 % en poids à 70 % en poids ;
un polymère à base de propylène souple (B) dans une plage de 30 % en poids à 95 % en poids ;
un polymère à base de propylène (C) modifié par greffage avec un monomère éthyléniquement insaturé, dans une plage de 0,1 % en poids à 20 % en poids ;
un polyéthylène (D) dans une plage de 1 % en poids à 20 % en poids ; et
un copolymère aléatoire éthylène/α-oléfine (E) dans une plage de 1 % en poids à 30 % en poids,
à condition qu'une quantité totale de (A), (B), (C), (D) et (E) soit de 100 % en poids ;
le polymère à base de propylène (A) :
un polymère à base de propylène présentant une teneur en unités structurales dérivées de propylène dans une plage de 80 % en mole à 100 % en mole et une teneur en unités structurales dérivées d'éthylène et/ou d'une α-oléfine excluant le propylène dans une plage de 20 % en mole ou moins, à condition qu'une quantité totale de la teneur en unités structurales dérivées de propylène et de la teneur en unités structurales dérivées d'éthylène et/ou d'une α-oléfine excluant le propylène soit de 100 % en mole, et
présentant une densité telle que mesurée conformément à ASTM D1505 de 0,89 g/cm³ ou plus ;
le polymère à base de propylène souple (B) :
un polymère à base de propylène souple présentant une teneur en unités structurales dérivées de propylène dans une plage de 50 % en mole à 95 % en mole et une teneur en unités structurales dérivées d'éthylène et/ou d'une α-oléfine excluant le propylène dans une plage de 5 % en mole à 50 % en mole, à condition qu'une quantité totale de la teneur en unités structurales dérivées de propylène et de la teneur en unités structurales dérivées d'une α-oléfine excluant l'éthylène et/ou le propylène soit de 100 % en mole, et
présentant une densité telle que mesurée conformément à ASTM D1505 de moins de 0,89 g/cm³ ;
le polymère à base de propylène (C) modifié par greffage avec un monomère éthyléniquement insaturé :
un polymère à base de propylène modifié qui est formé par modification par greffage, avec un monomère éthyléniquement insaturé, un polymère à base de propylène (c) présentant une teneur en unités structurales dérivées de propylène de 50 % en mole à 100 % en mole et une teneur en unités structurales dérivées d'éthylène et/ou d'une α-oléfine excluant le propylène de 50 % en mole ou moins,
à condition qu'une quantité totale de la teneur en unités structurales dérivées d'éthylène et de la teneur en unités structurales dérivées d'éthylène et/ou d'une α-oléfine excluant le propylène soit de 100 % en mole, dans laquelle le monomère éthyléniquement insaturé est un acide carboxylique insaturé et/ou un dérivé de celui-ci ;
le polyéthylène (D) :
une teneur en unités structurales dérivées d'éthylène est de 90 % en mole à 100 % en mole, et
une densité telle que mesurée conformément à ASTM D1505 est dans une plage de 0,90 g/cm3 à 0,94 g/cm³ 0,94 g/cm³ ; et
le copolymère aléatoire éthylène/α-oléfine (E) :
une teneur en unités structurales dérivées d'éthylène est dans une plage de 50 % en mole à 88 % en mole et une teneur en unités structurales dérivées d'une α-oléfine est dans une plage de 12 % en mole à 50 % en mole, à condition qu'une quantité totale de la teneur en unités structurales dérivées d'éthylène et de la teneur en unités structurales dérivées d'une α-oléfine soit de 100 % en mole, et
une densité telle que mesurée conformément à ASTM D1505 est inférieure à 0,90 g/cm³.

2. Composition de résine selon la revendication 1, dans laquelle le monomère éthyléniquement insaturé est choisi parmi un composé insaturé présentant un ou plusieurs groupes d'acide carboxylique, un ester d'un composé présentant un groupe acide carboxylique et un alcool alkylique, et un composé insaturé présentant un ou plusieurs groupes anhydrides carboxyliques.

3. Composition de résine selon la revendication 1 ou la revendication 2, dans laquelle, dans le copolymère aléatoire éthylène/α-oléfine (E), l'α-oléfine constituant le copolymère aléatoire éthylène/α-oléfine (E) est une α-oléfine présentant 3 à 8 atomes de carbone.

4. Composition de résine selon l'une quelconque des revendications 1 à 3, dans laquelle le polymère à base de propylène souple (B) est un copolymère propylène/éthylène.

5. Composition de résine selon l'une quelconque des revendications 1 à 4, dans laquelle le polymère à base de propylène (C) modifié par greffage avec un monomère éthyléniquement insaturé, présente des unités structurales dérivées du monomère éthyléniquement insaturé dans une quantité de 0,01 % en masse à 5,0 % en masse.

6. Composition de résine selon l'une quelconque des revendications 1 à 5, dans laquelle le polymère à base de propylène (C) modifié par greffage avec un monomère éthyléniquement insaturé, est un polymère à base de propylène (C) modifié par greffage avec de l'anhydride maléique.

7. Composition de résine selon l'une quelconque des revendications 1 à 6, dans laquelle la composition de résine est une composition de résine exempte d'agent poisseux.

8. Adhésif comprenant la composition de résine selon l'une quelconque des revendications 1 à 7.

9. Corps multicouche comprenant une couche composée de la composition de résine selon l'une quelconque des revendications 1 à 7.

10. Corps multicouche selon la revendication 9, dans lequel la couche composée de la composition de résine est stratifiée sur au moins une surface d'une couche de substrat.

11. Corps multicouche selon la revendication 10, dans lequel la couche de substrat présente une couche de dépôt en phase vapeur d'un composé inorganique ou une couche métallique sur la surface de la couche de substrat sur laquelle la composition de résine est stratifiée.

12. Corps multicouche selon la revendication 11, dans lequel la couche de dépôt en phase vapeur d'un composé inorganique est une couche de dépôt en phase vapeur d'aluminium.

13. Corps multicouche selon la revendication 11, dans lequel la couche métallique est une couche d'aluminium.
